# EUROPEAN PATENT APPLICATION

(11) **EP 4 749 874 A1**
(43) Date of publication of application: **27.05.2026**
(21) Application number: 24841946.7
(22) Date of filing: 11.03.2024
(51) Int. Cl.: H02J 3/38, H02H 7/00, H02H 7/26, H02H 3/02

(54) **SWITCHING CIRCUIT, OFF-GRID/GRID-CONNECTED CIRCUIT, AND OFF-GRID/GRID-CONNECTED CONTROL METHOD**

(30) Priority: 18.07.2023 CN 202310882636; 18.07.2023 CN 202310876996; 25.10.2023 CN 202322875669 U
(71) Applicant: Shanghai Sigeyuan Intelligent Technology Co., Ltd., Shanghai 200000 (CN)
(72) Inventor: ZHOU, Tao, Shanghai 200000 (CN); SUN, Jianwen, Shanghai 200000 (CN); CAI, Tianxiong, Shanghai 200000 (CN); WANG, Kangyu, Shanghai 200000 (CN)
(74) Representative: Bayramoglu et al.
(86) International application number: PCT/CN2024/080951
(87) International publication number: WO 2025/015943

(57) **Abstract**

The present disclosure relates to a switching circuit, an off-grid/grid-connected circuit, and a grid-connection/disconnection control method. The switching circuit can reasonably control turn-on and turn-off of a contactor on a power supply circuit through a relay, such that only one auxiliary power supply is arranged to draw power from any one power supply port, thereby achieving simple control, high reliability, and low costs. Additionally, the switching circuit in the present disclosure is connected in parallel to a rapid current turn-off unit at two ends of a first relay. When a short circuit is detected on a power grid side, a control unit controls the rapid current turn-off unit to turn off, which can save contact separation and arc extinction time of the first relay, thereby significantly reducing time required for grid-connected to off-grid switching, and effectively reducing a safety risk. In addition, fault detection time can be effectively reduced by using a sampling calculation unit to sample a voltage of a power grid in real time for detection and combining the switching circuit, thereby reducing total time required for the grid-connected to off-grid switching, and effectively lowering the safety risk.

## Description

### TECHNICAL FIELD

The present disclosure relates to the field of grid-connection/disconnection technologies, and specifically to a switching circuit, an off-grid/grid-connected circuit, and a grid-connection/disconnection control method.

### BACKGROUND TECHNOLOGY

With the popularization of photovoltaic (PV) power generation and the development of energy storage technologies, residential energy storage products have gained increasing favor among consumers. There are also diversified residential power sources, including a power grid, a PV system, a battery, and a fuel generator. In order to rationally distribute these energy sources to ensure uninterrupted and continuous power supply for residents, an intelligent control apparatus is required to act as an energy router. The router shall be capable of supplying power to residents when any of the power grid, the PV system, the battery, and the fuel generator is energized. The router needs to be internally equipped with a control circuit and a switching circuit for turning the control circuit on and off. An auxiliary power supply shall be designed to draw power from a plurality of ports, thereby ensuring that the auxiliary power supply can operate when any power supply terminal is energized. This, however, imposes more requirements on the auxiliary power supply, for example, power drawing from each port must comply with electromagnetic compatibility (EMC) and surge requirements, which not only increases the power supply cost but also elevates the risk of failure. Currently, in a scheme for drawing power from a plurality of power supply ports, there are usually a plurality of ports for power supply. An internal auxiliary power supply draws power from post-stages of circuit breakers of the ports. This increases EMC filtering and protection circuits for each power drawing port, and a plurality of primary windings are added to one auxiliary power transformer to make a single auxiliary power supply operate. Nevertheless, only one primary winding can participate in the operation of the transformer at a time, resulting in complex interlocking relationships among control circuits of the primary windings. In addition, each primary winding requires an independent control circuit and main switching transistor, resulting in a relatively complex circuit configuration and a high cost. Therefore, it is necessary to optimize and adjust the switching circuit to reliably and stably power on the auxiliary power supply.

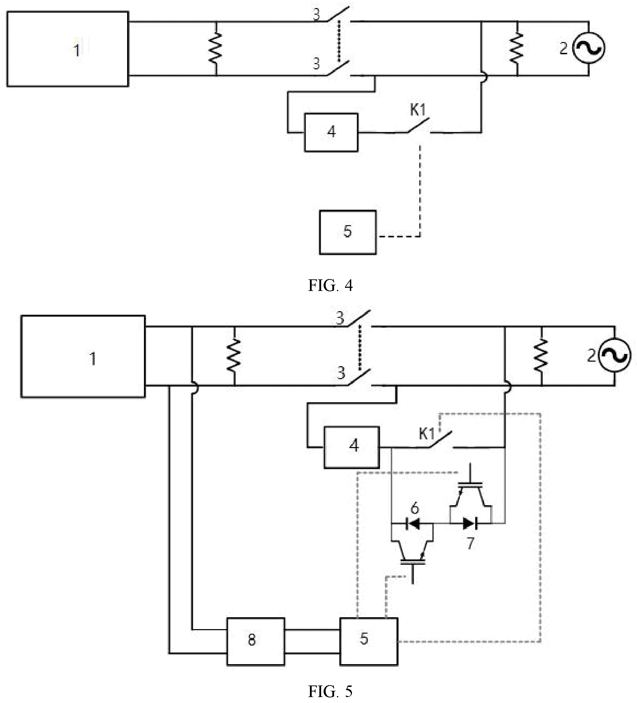

In addition, referring to FIG. 4, an existing off-grid/grid-connected circuit generally includes a grid-tied power supply 1, a power grid 2, and a contactor unit. The contactor unit includes a contactor contact 3, a contactor coil 4, and a coil relay 5. The contactor contact 3 is connected between the grid-tied power supply 1 and the power grid 2, the contactor coil 4 is connected to the contactor contact 3 and controls turn-on and turn-off of the contactor contact 3, and the coil relay 5 is connected to the contactor coil 4.

When the power grid 2 operates normally, the coil relay 5 turns on, the contactor coil 4 is energized, and the contactor coil 4 controls the contactor contact 3 to turn on, thereby realizing grid connection. In the event of a short circuit on a power grid side, a control unit 6 can control the coil relay 5 to turn off. As a result, the contactor coil 4 loses power, the contactor contact 3 turns off, and an output port of the grid-tied power supply 1 is short-circuited, causing a voltage to drop to zero. The grid-tied power supply 1 switches to a voltage source mode to complete grid-connected to off-grid switching. The time required for the grid-connected to off-grid switching consists of three parts:
1. Fault detection time for the power grid 2.
2. Contact separation and arc extinction time of the coil relay 5.
3. Separation time of the contactor contact 3.

In summary, at present, the total time required for the grid-connected to off-grid switching is approximately 30 ms to 60 ms. Operational hysteresis of the coil relay 5 increases the time for the grid-connected to off-grid switching, and a relatively large delay leads to a high safety risk to a great extent.

Therefore, there is an urgent need for a novel switching circuit and a novel grid-connected to off-grid switching solution to address the aforementioned problems.

### CONTENT OF THE INVENTION

A primary objective of the present disclosure is to overcome at least one of the aforementioned defects and to provide a switching circuit in which an auxiliary power supply can draw power from any one power supply terminal, thereby achieving simple control, high reliability, and low costs. In addition, the present disclosure optimally achieves rapid current turn-off.

A primary objective of the present disclosure is to overcome at least one of the aforementioned defects and to provide an off-grid/grid-connected circuit and a grid-connection/disconnection control method, which are based on the above design of rapid current turn-off, and can significantly reduce time required for grid-connected to off-grid switching and effectively lower a safety risk.

In order to achieve the above objectives, the present disclosure adopts the following technical solutions:
The present disclosure provides a switching circuit, including a first power supply terminal, a second power supply terminal, a first contactor, a first relay, and a control unit, where the first power supply terminal is connected to a power grid, the second power supply terminal is connected to a grid-tied power supply, the first contactor is configured to control turn-on and turn-off of a circuit, and the first relay is configured to control signal conversion and isolation;
the first contactor includes a contact of the first contactor and a coil of the first contactor;
the first power supply terminal is connected to the second power supply terminal through the contact of the first contactor, and the first power supply terminal is also connected to the coil of the first contactor through the first relay; and
the control unit controls turn-on and turn-off of the first relay.

According to an implementation of the present disclosure, the switching circuit further includes an auxiliary power supply, where the first power supply terminal is separately connected to the second power supply terminal and the auxiliary power supply through the contact of the first contactor, the auxiliary power supply is connected to the control unit to provide a working power supply for the control unit, and a contact of the first relay is a normally closed contact.

According to an implementation of the present disclosure, the first power supply terminal is also connected to a user load through the contact of the first contactor.

According to an implementation of the present disclosure, the switching circuit further includes a first circuit breaker, where the first power supply terminal is connected to the power grid through the first circuit breaker, the first circuit breaker is configured to interrupt a current path in the circuit, a contact of the first relay is a normally closed contact, and the contact of the first contactor is a normally open contact.

According to an implementation of the present disclosure, the switching circuit further includes a third power supply terminal, a second contactor, and a second relay, where the second contactor is configured to control the turn-on and the turn-off of the circuit, and the second relay is configured to control the signal conversion and isolation;
the second contactor includes a contact of the second contactor and a coil of the second contactor;
the third power supply terminal is connected to the second power supply terminal through the contact of the second contactor, and the third power supply terminal is also connected to the coil of the second contactor through the second relay; and
the control unit is further configured to control turn-on and turn-off of the second relay.

According to an implementation of the present disclosure, the switching circuit further includes an auxiliary power supply and an electricity load, where the third power supply terminal is separately connected to the second power supply terminal, the auxiliary power supply, and the user load through the contact of the second contactor, and the auxiliary power supply is connected to the control unit to provide a working power supply for the control unit.

According to an implementation of the present disclosure, the switching circuit further includes a third relay, where the coil of the second contactor is connected to the second power supply terminal through the third relay, and the control unit is further configured to control turn-on and turn-off of a contact of the third relay.

According to an implementation of the present disclosure, the switching circuit further includes a second circuit breaker, where the third power supply terminal is connected to a fuel generator or an intelligent load through the second circuit breaker, the second circuit breaker is configured to interrupt a current path in the circuit, a contact of the second relay is a normally closed contact, and the contact of the second contactor is a normally open contact.

According to an implementation of the present disclosure, the switching circuit further includes a semiconductor switching transistor, where the semiconductor switching transistor is connected in parallel to the contact of the first relay; and
the control unit is configured to control the semiconductor switching transistor to turn on and control the contact of the first relay to turn off when the auxiliary power supply is energized.

According to an implementation of the present disclosure, the semiconductor switching transistor adopts any one of a power diode, a field effect transistor (FET), a bipolar junction transistor (BJT), an insulated gate bipolar transistor (IGBT), and a thyristor.

According to an implementation of the present disclosure, the grid-tied power supply includes one or more of a PV power supply, a wind power supply, a nuclear power supply, and an energy storage power supply, and the second power supply terminal is connected to the grid-tied power supply through an inverter.

According to an implementation of the present disclosure, the switching circuit further includes a rapid current turn-off unit, where the rapid current turn-off unit is connected in parallel across two ends of the first relay, and the control unit controls turn-on and turn-off of the rapid current turn-off unit.

According to an implementation of the present disclosure, the rapid current turn-off unit includes a first IGBT and a second IGBT, an emitter of the first IGBT is connected to an emitter of the second IGBT, and a collector of the first IGBT and a collector of the second IGBT are respectively connected to the two ends of the first relay; or the rapid current turn-off unit includes a first IGBT and a second IGBT, a collector of the first IGBT is connected to a collector of the second IGBT, and an emitter of the first IGBT and an emitter of the second IGBT are respectively connected to the two ends of the first relay.

According to an implementation of the present disclosure, the control unit controls the first IGBT and the second IGBT to turn on or off simultaneously, so as to bidirectionally turn on or off a branch in which the first IGBT and the second IGBT are located.

According to an implementation of the present disclosure, response time of the rapid current turn-off unit is less than 0.1 ms.

The present disclosure further provides an off-grid/grid-connected circuit, including a grid-tied power supply, a power grid, and the above switching circuit, where the contact of the first contactor is connected between the grid-tied power supply and the power grid.

According to an implementation of the present disclosure, after the first relay is energized, the coil of the first contactor is energized and controls the contact of the first contactor to turn on, such that the grid-tied power supply is connected to the power grid; and after the grid-tied power supply is connected to the power grid, the control unit controls the first IGBT and the second IGBT to turn on synchronously and controls the first relay to turn off.

According to an implementation of the present disclosure, when a short circuit occurs on a power grid side, the control unit controls the first IGBT and the second IGBT to turn off synchronously.

According to an implementation of the present disclosure, the off-grid/grid-connected circuit further includes a detection unit, where the detection unit is connected to the control unit, the detection unit detects in real time whether a short circuit occurs on the power grid side, and the control unit controls, based on a detection result of the detection unit, the first IGBT and the second IGBT to turn on or off synchronously.

According to an implementation of the present disclosure, the detection unit determines, by detecting a voltage and/or an instantaneous active power of the power grid in real time, whether the short circuit occurs on the power grid side.

According to an implementation of the present disclosure, the off-grid/grid-connected circuit further includes a sampling calculation unit, where the sampling calculation unit samples a voltage of the power grid in real time and compares the sampled voltage of the power grid with a voltage threshold; and when the voltage that is of the power grid and sampled by the sampling calculation unit is less than the voltage threshold, the control unit turns off the first relay or the rapid current turn-off unit.

According to an implementation of the present disclosure, the sampling calculation unit is further configured to sample the voltage and a current of the power grid in real time before the grid-tied power supply is connected to the power grid, and the control unit is further configured to turn on the rapid current turn-off unit when the voltage of the power grid is greater than the voltage threshold and the current of the power grid is less than a current threshold.

According to an implementation of the present disclosure, the voltage threshold is any value within a range of 50% to 95% of a reference voltage of the power grid.

According to an implementation of the present disclosure, the voltage threshold is any value within a range of 5% to 50% of a reference voltage of the power grid.

The present disclosure further provides a grid-connection/disconnection control method, which is applied to the above off-grid/grid-connected circuit, and includes following steps:
S1, turning on the first relay after powering on the power grid, and turning on the contact of the first contactor after energizing the coil of the first contactor, such that the grid-tied power supply is connected to the power grid; and
S2, after the grid-tied power supply is connected to the power grid, controlling the rapid current turn-off unit to turn on and controlling the first relay to turn off.

According to an implementation of the present disclosure, a following step is further included:
S3, when a short circuit occurs on the power grid side, controlling, by using the control unit, the first IGBT and the second IGBT to turn off synchronously, so as to bidirectionally turn off a branch in which the first IGBT and the second IGBT are located.

According to an implementation of the present disclosure, in the step S3, whether the short circuit occurs on the power grid side is detected in real time by using the detection unit.

The present disclosure further provides a grid-connection/disconnection control method, which is applied to the above off-grid/grid-connected circuit, and includes following steps:
L1, before the grid-tied power supply is connected to the power grid, sampling, by the sampling calculation unit, a voltage and a current of the power grid in real time, and controlling, by the control unit, the first relay or the rapid current turn-off unit to turn on when the voltage of the power grid is greater than the voltage threshold and the current of the power grid is less than the current threshold; and
L2, after the grid-tied power supply is connected to the power grid, sampling, by the sampling calculation unit, the voltage of the power grid in real time, and controlling, by the control unit, the first relay or the rapid current turn-off unit to turn off when the sampling calculation unit detects that the voltage of the power grid is less than the voltage threshold.

28. A grid-connection/disconnection control method is applied to the off-grid/grid-connected circuit according to claim 21, and includes following steps:
L1, before the grid-tied power supply is connected to the power grid, sampling, by the sampling calculation unit, a voltage and a current of the power grid in real time, and controlling, by the control unit, the first relay to turn on when the voltage of the power grid is greater than a voltage threshold and the current of the power grid is less than a current threshold; and
L2, after the grid-tied power supply is connected to the power grid, controlling, by the control unit, the first relay to turn off after controlling a rapid current turn-off unit to turn on, sampling, by the sampling calculation unit, the voltage of the power grid in real time, and controlling, by the control unit, the rapid current turn-off unit to turn off when the sampling calculation unit detects that the voltage of the power grid is less than the voltage threshold.

Compared with the prior art, the present disclosure has the following advantages and beneficial effects:
For the switching circuit in the present disclosure, a first relay is disposed in a power drawing circuit of an auxiliary power supply. When a first power supply terminal is energized, a coil of a first contactor is energized and a contact of the first contactor turns on, such that a post-stage user load and the auxiliary power supply are energized and start to operate normally. When the first power supply terminal is de-energized but a second power supply terminal is energized, the user load and the auxiliary power supply draw power from the second power supply terminal and can also operate normally. In other words, turn-on and turn-off of a contactor in a power supply circuit can be reasonably controlled through a relay, such that only one auxiliary power supply is arranged to draw power from any one power supply port, thereby achieving simple control, high reliability, and low costs.

Additionally, in the switching circuit in the present disclosure, a rapid current turn-off unit is connected in parallel across two ends of the first relay. When a short circuit is detected on a power grid side, a control unit can control the rapid current turn-off unit to turn off, which can save contact separation and arc extinction time of the first relay, thereby significantly reducing time required for grid-connected to off-grid switching, and effectively reducing a safety risk.

In addition, an off-grid/grid-connected circuit uses a sampling calculation unit to sample a voltage of a power grid in real time and compare the sampled voltage of the power grid with a voltage threshold. When the voltage that is of the power grid and sampled by the sampling calculation unit is less than the voltage threshold, the control unit turns off the rapid current turn-off unit or the first relay without waiting for the voltage of the power grid to drop to 0. This effectively saves fault detection time, thus reducing total time required for the grid-connected to off-grid switching and effectively lowering the safety risk.

### DESCRIPTION OF THE DRAWINGS

Some specific embodiments of the present disclosure will be described in detail below in an illustrative rather than a restrictive manner with reference to the accompanying drawings. The same reference numerals in the accompanying drawings refer to like or similar components or parts. Those skilled in the art should understand that the accompanying drawings are not plotted to scale. In the accompanying drawings:
FIG. 1 is a structural block diagram of an intelligent power distribution cabinet;
FIG. 2 is a schematic diagram showing connection of a switching circuit according to an embodiment of the present disclosure;
FIG. 3 is a schematic diagram showing local connection of a switching circuit according to another embodiment of the present disclosure;
FIG. 4 is a schematic diagram showing connection of an existing off-grid/grid-connected circuit;
FIG. 5 is a schematic diagram showing connection of an off-grid/grid-connected circuit according to a preferred embodiment of the present disclosure;
FIG. 6 is a schematic diagram showing connection of an off-grid/grid-connected circuit according to another preferred embodiment of the present disclosure;
FIG. 7 is a schematic diagram showing connection of an off-grid/grid-connected circuit according to Embodiment 8 of the present disclosure;
FIG. 8 is a schematic diagram showing connection of an off-grid/grid-connected circuit according to Embodiment 9 of the present disclosure; and
FIG. 9 is a schematic diagram showing connection of an off-grid/grid-connected circuit according to Embodiment 10 of the present disclosure.

Reference numerals:
KA1: first contactor; KA2: second contactor; K1: contact of a first relay; K2: contact of a second relay; K3: contact of a third relay; QF1: first circuit breaker; QF2: second circuit breaker; S1: semiconductor switching transistor;
1: grid-tied power supply; 2: power grid; 3: contact of a first contactor; 4: coil of the first contactor; 5: control unit; 6: first IGBT; 7: second IGBT; 8: auxiliary power supply; 9: sampling calculation unit.

### SPECIFIC IMPLEMENTATIONS

The following clearly and completely describes the technical solutions of the present disclosure with reference to accompanying drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In addition, the technical features involved in the following implementations of the present disclosure may be combined with each other as long as they do not constitute a conflict with each other.

The following first briefly describes one technical field (intelligent power distribution cabinet) of the present disclosure in conjunction with specific implementations of the present disclosure.

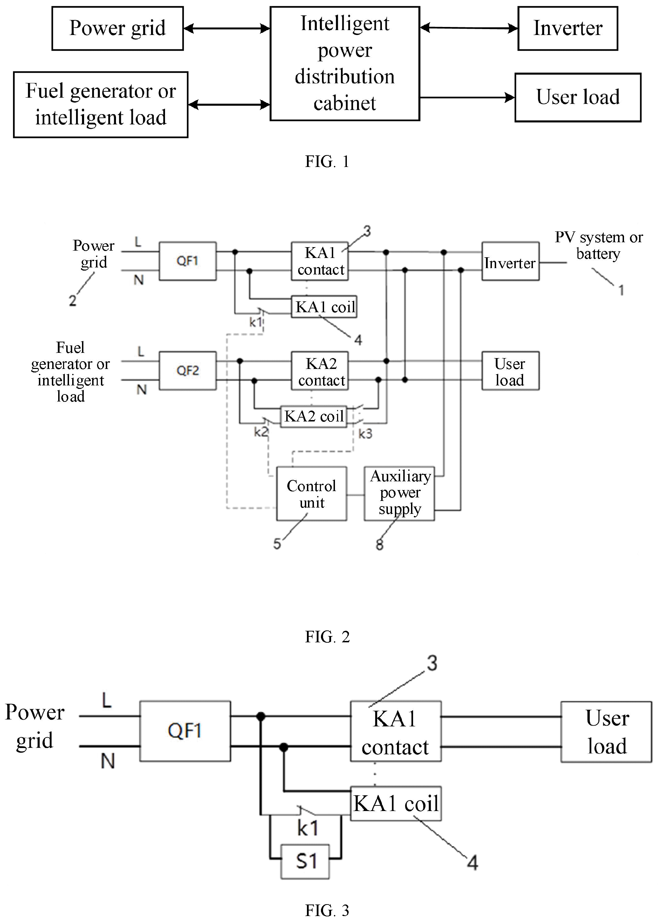

Referring to FIG. 1, the intelligent power distribution cabinet is mainly provided with three power supply ports, namely a power grid, an inverter, and a fuel generator. A fuel generator port can also be connected to an intelligent load, for example, some high-power electrical appliances.

Based on the above, the present disclosure provides a switching circuit and a control system for the intelligent power distribution cabinet to solve the following technical problems: (1) how to arrange one auxiliary power supply to draw power arbitrarily from a plurality of power supply terminals and achieve simple control, high reliability, and low costs; (2) how to achieve rapid grid-connected/off-grid switching without interrupting residential power supply; (3) how to ensure that users can still draw power normally from the power grid to meet a basic residential power demand after an auxiliary power supply or a control unit of the intelligent power distribution cabinet fails.

### Embodiment 1

Referring to FIG. 2, this embodiment of the present disclosure provides a power drawing circuit for an auxiliary power supply. The power drawing circuit for an auxiliary power supply includes a first power supply terminal, a second power supply terminal, first contactor KA1, a first relay, a control unit, and an auxiliary power supply. In this embodiment, the first power supply terminal is a power grid terminal, and the second power supply terminal is an inverter output terminal of a PV system or a battery. That is, a grid-tied power supply adopted in this embodiment is the PV system or the battery.

The first power supply terminal is separately connected to the second power supply terminal, the auxiliary power supply, and a user load through a contact of the first contactor KA1, and the first power supply terminal is also connected to a coil of the first contactor KA1 through contact K1 of the first relay.

The auxiliary power supply is also connected to the control unit, and the control unit is configured to control turn-on and turn-off of the contact K1 of the first relay.

In this embodiment, a control function of the control unit may be implemented by a microprocessor unit (MPU), a microcontroller unit (MCU), a digital signal processor (DSP), a field-programmable gate array (FPGA), or any combination thereof.

The auxiliary power supply is a power supply used in a power system to provide electric energy for supporting system operation, monitoring, protection, or execution of a specific function. It is generally not a main power supply, but an additional power supply for maintaining and managing the power system. The auxiliary power supply usually adopts a standby power supply (such as a storage battery, a diesel generator, or a solar cell) or an uninterruptible power supply (UPS) system to supply the electric energy. A primary objective of the auxiliary power supply is to ensure availability and stability of the power system, especially in the event of a failure of the main power supply or other emergency situations.

A contactor is mainly configured to perform switching control on a high-current load, while a relay is configured to control signal conversion and isolation and execute various complex control functions. Both the contactor and the relay are important components in an electrical control system, and are configured to achieve automation and circuit protection.

A circuit breaker is configured to interrupt a current path in a circuit to prevent accidents caused by circuit overload, short circuit, and other electrical faults.

For the power drawing circuit for an auxiliary power supply in the present disclosure, the first relay is disposed. When the first power supply terminal is energized, the coil of the first contactor KA1 is energized and the contact of the first contactor KA1 turns on, such that the post-stage user load and the auxiliary power supply are energized and start to operate normally. When the first power supply terminal is de-energized but the second power supply terminal is energized, the user load and the auxiliary power supply draw power from the second power supply terminal and can also operate normally. In conclusion, turn-on and turn-off of the contactor in a power supply circuit can be reasonably controlled through the relay, such that only one auxiliary power supply is arranged to draw power from any one power supply port, thereby achieving simple control, high reliability, and low costs.

Further, the power drawing circuit for an auxiliary power supply further includes first circuit breaker QF1, where the first power supply terminal is connected to the power grid through the first circuit breaker QF1, and the contact K1 of the first relay is a normally closed contact.

In this embodiment, the second power supply terminal is connected to an inverter, and the inverter is connected to a PV module or an energy storage battery.

The first circuit breaker QF1 is disposed. Therefore, when the power grid is energized, the first circuit breaker QF1 turns on. Since the contact K1 of the first relay on a control board is the normally closed contact, the contact K1 of the first relay is in an on state at this time. In this case, the coil of the first contactor KA1 is energized, the contact of the first contactor KA1 turns on, a port of the inverter is energized, and the auxiliary power supply is energized and starts to operate. The circuit breaker can provide overload protection and short circuit protection functions to protect the circuit and electrical equipment from damage caused by the current overload, short circuit, and other electrical faults.

Further, the power drawing circuit for an auxiliary power supply circuit further includes a third power supply terminal, second contactor KA2, and a second relay. The third power supply terminal may serve as an output terminal of a fuel generator or an intelligent load.

The third power supply terminal is separately connected to the second power supply terminal, the auxiliary power supply, and the user load through a contact of the second contactor KA2, and the third power supply terminal is also connected to a coil of the second contactor KA2 through contact K2 of the second relay.

The control unit is further configured to control turn-on and turn-off of the contact K2 of the second relay.

The second relay is disposed. Therefore, when the third power supply terminal is energized, the coil of the second contactor KA2 is energized and the contact of the second contactor KA2 turns on, such that the post-stage user load and the auxiliary power supply are energized and start to operate normally. When the third power supply terminal is de-energized but the second power supply terminal is energized, the user load and the auxiliary power supply draw power from the second power supply terminal and can also operate normally.

Further, the power drawing circuit for an auxiliary power supply further includes second circuit breaker QF2, where the third power supply terminal is connected to the fuel generator through the second circuit breaker QF2, and the contact K2 of the second relay is a normally closed contact.

The second circuit breaker QF2 is disposed. Therefore, when the fuel generator is energized, the second circuit breaker QF2 turns on. Since the contact K2 of the second relay on the control board is the normally closed contact, the contact K2 of the second relay is in the on state at this time. In this case, the coil of the second contactor KA2 is energized, the contact of the second contactor KA2 turns on, the port of the inverter is energized, and the auxiliary power supply is energized and starts to operate.

Referring to FIG. 3, the power drawing circuit for an auxiliary power supply further includes semiconductor switching transistor S1, where the semiconductor switching transistor S1 is connected in parallel to the contact K1 of the first relay.

The control unit is configured to control the semiconductor switching transistor S1 to turn on and control the contact K1 of the first relay to turn off when the auxiliary power supply is energized.

In this embodiment, the semiconductor switching transistor S1 adopts any one of a power diode, an FET, a BJT, an IGBT, and a thyristor.

For a fast grid connection/disconnection function, contact switching of a traditional contactor or relay is at a level of ms. Coupled with determination time in control, total time for grid-connected/off-grid switching will exceed 20 ms, which may cause a load on a user side to power off and shut down. In addition, during off-grid to grid-connected switching, a tolerance in mechanical action time of the contact of the contactor or the relay is large, which is likely to lead to inconsistent power grid phases at a moment of the switching, resulting in an instantaneous large current impact that affects a service life of a switching device and operation of the post-stage load. By adopting the power drawing circuit for an auxiliary power supply in this embodiment, and taking advantage of fast response of the semiconductor switching transistor S1, turn-on and turn-off of a contactor on a power grid side are switched by the semiconductor switching transistor S1, enabling a fast grid-connected/off-grid switching function within 5 ms.

Specifically, the semiconductor switching transistor S1 is connected in parallel across two ends of the normally closed contact K1 of the first relay in a coil power supply circuit of the first contactor KA1. After the auxiliary power supply is energized, the control unit controls the semiconductor switching transistor S1 to turn on and then turns off the normally closed contact K1 of the first relay. When the auxiliary power supply is energized, the semiconductor switching transistor S1 is used to control turn-on and turn-off of the first contactor KA1 at all times, that is, the normally closed contact K1 of the first relay is controlled to remain in a normally open state. Turn-on and turn-off time of the semiconductor switching transistor S1 is at a level of ns, while turn-on and turn-off time of the relay is at the level of ms. Controlling the turn-on and the turn-off of the first contactor KA1 by using the semiconductor switching transistor S1 can greatly shorten grid-connected/off-grid switching time of the intelligent power distribution cabinet.

Regarding a fault of the intelligent power distribution cabinet, the common practice in the industry at present is to first energize the auxiliary power supply for operation, and then pick up the contactor on the power grid side to energize the user side. A defect of this practice is that once the auxiliary power supply fails, a power outage occurs on the user side, and a user cannot access power even if the power grid is energized at this time. To address this fault, an additional bypass contactor breaker may need to be added for emergency handling. In the power drawing circuit for an auxiliary power supply in this embodiment, the normally closed contact K1 of the first relay is used to control the first contactor KA1 on the power grid side to pick up. Once a control circuit or the auxiliary power supply fails, the normally closed contact can enable the first contactor KA1 on the power grid side to pick up, ensuring a basic power demand of the user. In other words, it can be ensured that the user can still draw power normally from the power grid to meet the basic residential power demand after the auxiliary power supply or the control unit of the intelligent power distribution cabinet fails.

Specifically, as shown in FIG. 3, the coil of the first contactor KA1 draws power from the power grid side, and the normally closed contact K1 of the first relay is connected in series in a power drawing circuit of the coil of the first contactor KA1. When the power grid is energized, the coil of the first contactor KA1 is energized, a normally open contact of the first contactor KA1 picks up, and the post-stage user load is energized. When the power grid is de-energized, the coil of the first contactor KA1 loses power, the normally open contact of the first contactor KA1 turns off, and the post-stage user load is de-energized. Basic power supply characteristics of the power grid are utilized. Therefore, when the control unit or the semiconductor switching transistor S1 fails, the normally closed contact K1 of the first relay is restored to a normally closed state, and other functions of the intelligent power distribution cabinet are disabled, such that the intelligent power distribution cabinet retains the basic power supply characteristics of the power grid. In addition, when the auxiliary power supply fails, the first relay loses power and its normally closed contact naturally restores to the normally closed state. At the same time, a post-stage inverter will also alarm the user of abnormal operation of the intelligent power distribution cabinet because it cannot communicate with the intelligent power distribution cabinet, but the user can still be ensured to draw power normally from the power grid at this time.

### Embodiment 2

This embodiment provides a power drawing circuit for an auxiliary power supply, and a difference between the power drawing circuit for an auxiliary power supply in this embodiment and that in Embodiment 1 is as follows:
In this embodiment, a third power supply terminal is connected to an intelligent load through second circuit breaker QF2. The intelligent load may be, for example, a high-power electrical appliance.

In this embodiment, the intelligent load is a load or a device that is used in computing, electronics, communication and automation system, and other fields, which has intellectualization, automation, and remote-control capabilities to a certain degree. Such a load can usually perceive an environment, automatically adapt to a condition, and respond to an external instruction, so as to optimize performance, improve efficiency, or provide a higher-level function.

The intelligent load may include a smart household device (such as a smart lighting device or a smart thermostat), an industrial automation system (such as an automatically controlled machine or a robot), an intelligent transportation system (such as an intelligent traffic signal light or an autonomous vehicle), and various embedded systems and Internet of Things (IoT) devices.

### Embodiment 3

Referring to FIG. 2 and FIG. 3, this embodiment provides a control system for an intelligent power distribution cabinet. The control system includes the aforementioned power drawing circuit for an auxiliary power supply, a power grid, and an inverter.

A first power supply terminal and a second power supply terminal of the power drawing circuit for an auxiliary power supply are respectively connected to the power grid and the inverter.

Further, the control system further includes a fuel generator or an intelligent load.

A third power supply terminal of the power drawing circuit for an auxiliary power supply is connected to the fuel generator or the intelligent load.

With the control system in this embodiment, a user can switch a load by controlling turn-on and turn-off of second contactor KA2, so as to save an electricity consumption in an off-grid mode. An auxiliary power supply generally draws power from an inverter access port, and then realizes multi-port power drawing through a first relay, a second relay, and a third relay.

Further, the third power supply terminal of the power drawing circuit for an auxiliary power supply is connected to the intelligent load, and a control unit of the power drawing circuit for an auxiliary power supply controls normally open contact K3 of the third relay to turn on; or
the third power supply terminal of the power drawing circuit for an auxiliary power supply is connected to the fuel generator, and the control unit of the power drawing circuit for an auxiliary power supply controls normally open contact K3 of the third relay to turn off.

Specifically, on one hand, when the intelligent load is connected to the third power supply terminal, although contact K2 of the second relay is a normally closed contact, a contact of the second contactor KA2 turns off due to a lack of power. The control unit can control the normally open contact K3 of the third relay to turn on, thereby turning on the contact of the second contactor KA2 and thus supplying power to the intelligent load. On the other hand, when the fuel generator is connected to the third power supply terminal, the normally closed contact K2 of the second relay is in a normally closed state, and the control unit controls the normally open contact K3 of the third relay to turn off. At this time, the contact of the second contactor KA2 can also turn on, and the second power supply terminal (namely, an inverter output terminal) is energized.

### Embodiment 4

Referring to FIG. 5, this embodiment provides a switching circuit, including a first contactor, first relay 5, a rapid current turn-off unit, and control unit 5.

The first contactor includes contact 3 of the first contactor and coil 4 of the first contactor. The coil 4 of the first contactor is connected to the contact 3 of the first contactor and controls turn-on and turn-off of the contact 3 of the first contactor. The first relay 5 is connected to the coil 4 of the first contactor. The rapid current turn-off unit is connected in parallel across two ends of the first relay. The control unit 5 controls turn-on and turn-off of the first relay 5 and the rapid current turn-off unit.

In the switching circuit in the present disclosure, the rapid current turn-off unit is connected in parallel across the two ends of the first relay 5. When a short circuit is detected on a power grid side, the control unit 5 controls the rapid current turn-off unit to turn off, which can save contact separation and arc extinction time of the first relay 5, thereby significantly reducing time required for grid-connected to off-grid switching, and effectively reducing a safety risk.

In this embodiment, the rapid current turn-off unit includes first IGBT 6 and second IGBT 7. An emitter of the first IGBT 6 is connected to an emitter of the second IGBT 7, and a collector of the first IGBT 6 and a collector of the second IGBT 7 are respectively connected to the two ends of the first relay 5. Herein, two diodes in the first IGBT 6 and the second IGBT 7 are connected back to back. This can ensure that a branch in which the first IGBT 6 and the second IGBT 7 are located can turn on or off in two directions, which is applicable to an alternating current (AC) power supply scenario.

Response time of an IGBT is typically at a level of µs. Compared with the contact separation and arc extinction time of the first relay 5, turn-off time of the IGBT is negligible. Therefore, the contact separation and arc extinction time of the first relay 5 is saved in essence during the grid-connected to off-grid switching.

Further, the control unit 5 controls the first IGBT 6 and the second IGBT 7 to turn on or off simultaneously, so as to bidirectionally turn on or off the branch in which the first IGBT 6 and the second IGBT 7 are located. This reduces overall turn-off time of the rapid current turn-off unit and further shortens time of the grid-connected to off-grid switching.

The first relay 5 is in a normally closed state, and the contact 3 of the first contactor is in a normally open state. That is, before grid-tied power supply 1 is connected to power grid 2, the first relay 5 is in an on state, and the contact 3 of the first contactor is in an open state. After the first relay 5 is powered on, the coil 4 of the first contactor is powered on and controls the contact 3 of the first contactor to turn on, such that the grid-tied power supply 1 is connected to the power grid 2. Subsequently, the control unit 5 controls the first IGBT 6 and the second IGBT 7 to simultaneously turn on, and controls the first relay 5 to turn off.

Further, the switching circuit in this embodiment also includes auxiliary power supply 8. The auxiliary power supply 8 is connected to the control unit 5 and supplies power to the control unit 5. In other embodiments, the auxiliary power supply 8 is separately connected to the control unit 5 and the first relay 5, and the auxiliary power supply 8 supplies power to the control unit 5 and the first relay 5. Further, the auxiliary power supply 8 may be an integrated auxiliary power supply or a split auxiliary power supply. The integrated auxiliary power supply can simultaneously supply power to both the control unit 5 and the first relay 5. The split auxiliary power supply can independently supply power to the control unit 5 and the first relay 5.

Preferably, response time of the rapid current turn-off unit is less than 0.1 ms. In other embodiments, the rapid current turn-off unit is not limited to the IGBT, which may be replaced by other devices that can achieve rapid current cutoff. This is not specifically limited.

### Embodiment 5

This embodiment provides a switching circuit, and a difference between the switching circuit in this embodiment and that in Embodiment 1 is as follows:
In this embodiment, a rapid current turn-off unit includes first IGBT 6 and second IGBT 7. A collector of the first IGBT 6 is connected to a collector of the second IGBT 7, and an emitter of the first IGBT 6 and an emitter of the second IGBT 7 are respectively connected to two ends of first relay 5. It can be understood as follows: Based on FIG. 5, the first IGBT 6 is translated to the right and the second IGBT 7 is translated to the left in FIG. 5. In this way, a connection mode in which the emitter of the first IGBT 6 is connected to the emitter of the second IGBT 7 (two diodes are connected back to back) is converted into a connection mode in which the collector of the first IGBT 6 is connected to the collector of the second IGBT 7 (the two diodes are connected face to face).

### Embodiment 6

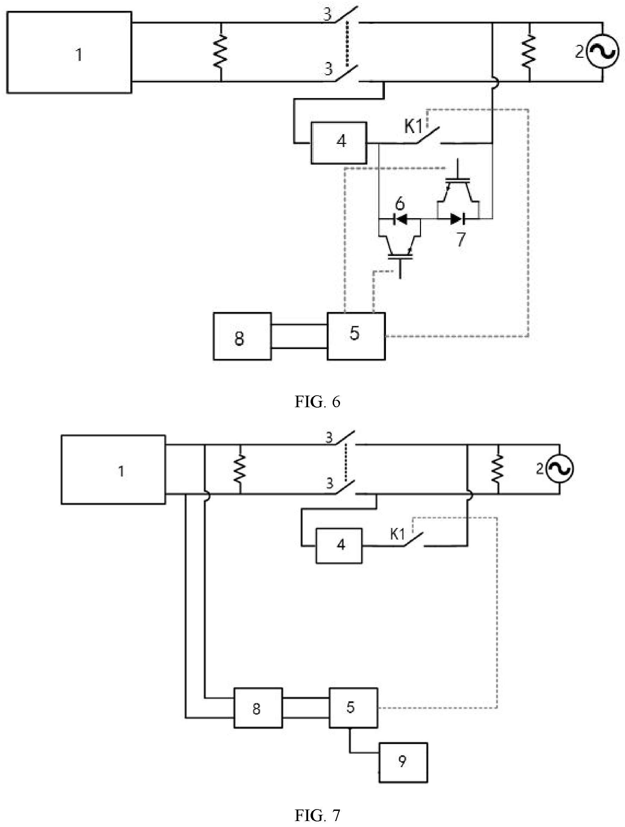

Referring to FIG. 5 and FIG. 6, this embodiment provides an off-grid/grid-connected circuit, including grid-tied power supply 1, power grid 2, and the switching circuit in any one of the above embodiments, where contact 3 of a first contactor is connected between the grid-tied power supply 1 and the power grid 2.

After control unit 5 controls first relay 5 to turn on, coil 4 of the first contactor controls the contact 3 of the first contactor to turn on, such that the grid-tied power supply 1 is connected to the power grid 2. After the grid-tied power supply is connected to the power grid 2, the control unit 5 controls first IGBT 6 and second IGBT 7 to simultaneously turn on, and controls the first relay 5 to turn off.

Further, when a short circuit occurs on a power grid side, the control unit controls the first IGBT and the second IGBT to turn off synchronously. This reduces overall turn-off time of a rapid current turn-off unit and further shortens time of grid-connected to off-grid switching.

Further, the off-grid/grid-connected circuit in the present disclosure further includes a detection unit, where the detection unit is connected to the control unit 5. The detection unit detects in real time whether the short circuit occurs on the power grid side, and the control unit 5 controls, based on a detection result of the detection unit, the first IGBT 6 and the second IGBT 7 to turn on or off synchronously. Specifically, when the detection unit detects the short circuit on the power grid side, the control unit 5 controls the first IGBT 6 and the second IGBT 7 to turn off simultaneously. When the detection unit does not detect the short circuit on the power grid side, the first IGBT 6 and the second IGBT 7 remain in an on state.

Optionally, the detection unit determines, by detecting a voltage and/or an instantaneous active power of the power grid in real time, whether the short circuit occurs on the power grid side. Specifically, when detecting that the voltage and/or the instantaneous active power of the power grid drops to 0, the detection unit determines that the short circuit has occurred on the power grid side.

Further, the contact 3 of the first contactor includes a first contact of the first contactor and a second contact of the first contactor. The first contact of the first contactor is connected to a live wire of the power grid 2, and the first contact of the first contactor is connected to a neutral wire of the power grid 2. The coil 4 of the first contactor controls the first contact of the first contactor and the second contact of the first contactor to turn on or off synchronously.

Optionally, the coil 4 of the first contactor is connected to the power grid 2 after being connected in series to the first relay 5 and is powered by the power grid 2; or the coil 4 of the first contactor is connected to the grid-tied power supply 1 after being connected in series to the first relay 5 and is powered by the grid-connected power supply 1. There may be no need to dispose an additional power supply to supply power to the first relay 5.

Auxiliary power supply 8 may alternatively be disposed. The auxiliary power supply 8 is connected to the power grid 2, and the power grid 2 supplies power to the auxiliary power supply 8; or the auxiliary power supply 8 is connected to the grid-tied power supply 1, and the grid-tied power supply 1 supplies power to the auxiliary power supply 8. Power for the auxiliary power supply 8 may be sourced from the grid-tied power supply 1 or the power grid 2. Herein, the auxiliary power supply 8 has a function of storing and converting electric energy from the grid-tied power supply 1 or the power grid 2, thereby ensuring that more stable electric energy is output. Further, the auxiliary power supply 8 may be independent, that is, it is not connected to the grid-tied power supply 1 or the power grid 2. Without relying on the electric energy from the grid-tied power supply 1 or the power grid 2, the auxiliary power supply 8 can also independently supply power to the control unit 5, as shown in FIG. 6. Further, the control unit 5 may be connected to the grid-tied power supply 1 or the power grid 2, such that the grid-tied power supply 1 or the power grid 2 supplies power to the control unit 5.

Optionally, the grid-tied power supply 1 includes one or more of a PV power supply, a wind energy power supply, a nuclear power supply, or an energy storage power supply. This is not specifically limited.

In the off-grid/grid-connected circuit in the present disclosure, the rapid current turn-off unit is connected in parallel across two ends of the first relay 5. When the short circuit is detected on the power grid side, the control unit 5 controls the rapid current turn-off unit to turn off, which can save contact separation and arc extinction time of the first relay 5, thereby significantly reducing time required for the grid-connected to off-grid switching, and effectively reducing a safety risk.

### Embodiment 7

This embodiment provides a grid-connection/disconnection control method, which is applied to the switching circuit described in the above embodiments. The grid-connection/disconnection control method includes the following steps:
Step S1: First relay 5 is controlled to turn on, contact 3 of a first contactor is controlled to turn on, and grid-tied power supply 1 is connected to power grid 2. Specifically, control unit 5 controls the first relay 5 to turn on. After the first relay 5 turns on, coil 4 of the first contactor becomes energized, and the coil 4 of the first contactor controls the contact 3 of the first contactor to turn on, such that the grid-tied power supply 1 is connected to the power grid 2.
Step S2: After the grid-tied power supply 1 is connected to the power grid 2, a rapid current turn-off unit is controlled to turn on, and the first relay 5 is controlled to turn off. Specifically, the rapid current turn-off unit includes first IGBT 6 and second IGBT 7, and their connection relationship is as described in Embodiment 1 and Embodiment 2. After the grid-tied power supply 1 is connected to the power grid 2, the control unit controls the first IGBT 6 and the second IGBT 7 to turn on, such that a current passes through the first IGBT 6 and the second IGBT 7. Then, the control unit 5 controls the first relay 5 to turn off.

Further, the grid-connection/disconnection control method further includes the following step:
S3: When a short circuit occurs on a power grid side, the control unit 5 controls the first IGBT 6 and the second IGBT 7 to turn off synchronously, so as to bidirectionally turn off a branch in which the first IGBT 6 and the second IGBT 7 are located. Specifically, when the short circuit occurs on the power grid side, the control unit 5 controls the first IGBT 6 and the second IGBT 7 to turn off simultaneously. In this way, a current on the coil 4 of the first contactor is effectively reduced, and the coil 4 of the first contactor controls the contact 3 of the first contactor to turn off, such that grid-connected to off-grid switching is achieved between the grid-tied power supply 1 and the power grid 2.

Further, in the step S3, whether the short circuit occurs on the power grid side is detected in real time by using a detection unit. The detection unit is connected to the control unit 5. The detection unit detects in real time whether the short circuit occurs on the power grid side, and the control unit 5 controls, based on a detection result of the detection unit, the first IGBT 6 and the second IGBT 7 to turn on or off synchronously.

The grid-connection/disconnection control method in the present disclosure can significantly reduce time required for the grid-connected to off-grid switching and effectively lower a safety risk.

### Embodiment 8

Referring to FIG. 7, this embodiment provides an off-grid/grid-connected circuit, including grid-tied power supply 1, power grid 2, a switching circuit, sampling calculation unit 10, and control unit 6.

The off-grid/grid-connected circuit includes a first contactor and a current turn-off module. The first contactor includes contact 3 of the first contactor and coil 4 of the first contactor. The contact 3 of the first contactor is connected between the grid-tied power supply 1 and the power grid 2. The coil 4 of the first contactor is connected to the contact 3 of the first contactor and controls turn-on and turn-off of the contact 3 of the first contactor. The current turn-off module is connected to the coil 4 of the first contactor.

The sampling calculation unit 9 samples a voltage of the power grid in real time and compares the sampled voltage of the power grid with a voltage threshold. The control unit 5 is configured to turn off the current turn-off module when the voltage that is of the power grid and sampled by the sampling calculation unit 9 is less than the voltage threshold.

The off-grid/grid-connected circuit in the present disclosure adopts the sampling calculation unit 9 to sample the voltage of the power grid in real time and compare the sampled voltage of the power grid with the voltage threshold. When the voltage that is of the power grid and sampled by the sampling calculation unit 9 is less than the voltage threshold, the control unit 5 turns off the current turn-off module without waiting for the voltage of the power grid to drop to 0. This effectively saves fault detection time, thus reducing total time required for grid-connected to off-grid switching, such that off-grid time is shortened by at least several milliseconds compared with that in the prior art, and effectively lowering the safety risk.

Optionally, the sampling calculation unit 9 is further configured to sample the voltage and a current of the power grid in real time before the grid-tied power supply 1 is connected to the power grid 2. The control unit 5 is further configured to turn on the current turn-off module when the voltage of the power grid is greater than the voltage threshold and the current of the power grid is less than a current threshold.

Preferably, the voltage threshold is any value within a range of 50% to 95% of a reference voltage of the power grid. In other embodiments of the present disclosure, the voltage threshold may be 50%, 75%, 95%, or other values of the reference voltage of the power grid, which is not specifically limited.

Preferably, the voltage threshold may alternatively be any value within a range of 5% to 50% of the reference voltage of the power grid. In other embodiments of the present disclosure, the voltage threshold may be 5%, 10%, 15%, 50%, or other values of the reference voltage of the power grid, which is not specifically limited.

In this embodiment, the current turn-off module includes coil relay 5, and the coil relay 5 is connected to the coil 4 of the first contactor. After the grid-tied power supply 1 is connected to the power grid 2, the coil relay 5 is in an on state. The control unit 5 is configured to turn off the coil relay 5 when the sampling calculation unit 9 detects that the voltage of the power grid is less than the voltage threshold.

Further, the contact 3 of the first contactor includes a first contact of the first contactor and a second contact of the first contactor. The first contact of the first contactor is connected to a live wire of the power grid 2, and the first contact of the first contactor is connected to a neutral wire of the power grid 2. The coil 4 of the first contactor controls the first contact of the first contactor and the second contact of the first contactor to turn on or off synchronously.

Optionally, the coil 4 of the first contactor is connected to the power grid 2 after being connected in series to the coil relay 5 and is powered by the power grid 2; or the coil 4 of the first contactor is connected to the grid-tied power supply 1 after being connected in series to the coil relay 5 and is powered by the grid-connected power supply 1. There may be no need to dispose an additional power supply to supply power to the coil relay 5.

Further, the switching circuit in this embodiment also includes auxiliary power supply 8. The auxiliary power supply 8 is connected to the control unit 5 and supplies power to the control unit 5. In other embodiments, the auxiliary power supply 8 is separately connected to the control unit 5 and the coil relay 5, and the auxiliary power supply 8 supplies power to the control unit 5 and the coil relay 5. Further, the auxiliary power supply 8 may be an integrated auxiliary power supply or a split auxiliary power supply. The integrated auxiliary power supply can simultaneously supply power to both the control unit 5 and the coil relay 5. The split auxiliary power supply can independently supply power to the control unit 5 and the coil relay 5.

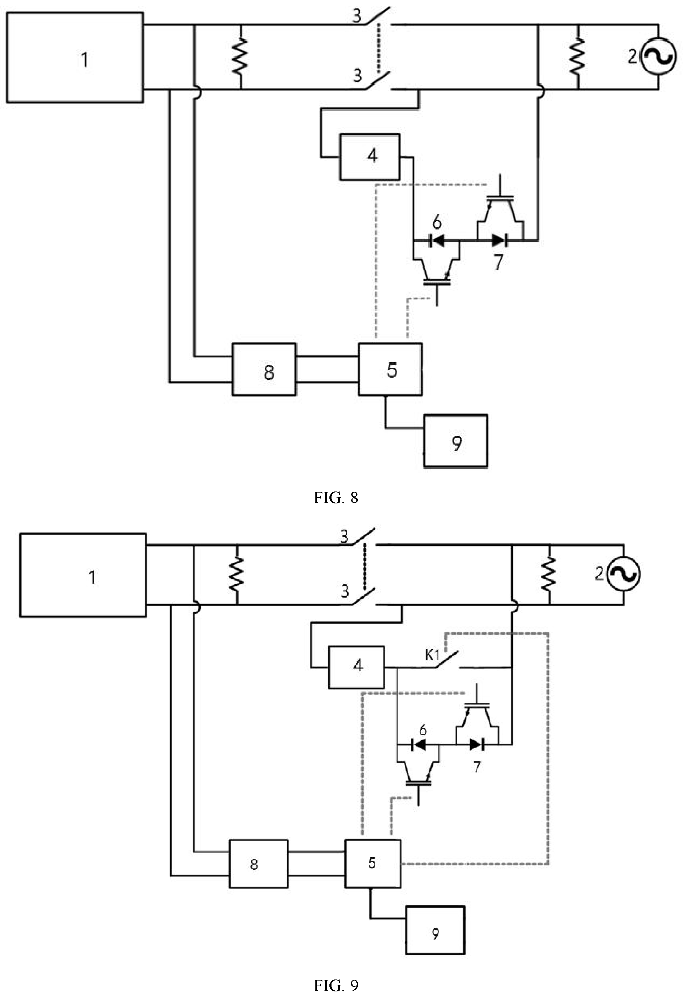

Further, the auxiliary power supply 8 is connected to the power grid 2, and the power grid 2 supplies power to the auxiliary power supply 8; or the auxiliary power supply 8 is connected to the grid-tied power supply 1, and the grid-tied power supply 1 supplies power to the auxiliary power supply 8. Power for the auxiliary power supply 8 may be sourced from the grid-tied power supply 1 or the power grid 2. Herein, the auxiliary power supply 8 has a function of storing and converting electric energy from the grid-tied power supply 1 or the power grid 2, thereby ensuring that more stable electric energy is output. Further, the auxiliary power supply 8 may be independent, that is, it is not connected to the grid-tied power supply 1 or the power grid 2. Without relying on the electric energy from the grid-tied power supply 1 or the power grid 2, the auxiliary power supply 8 can also independently supply power to the control unit 5, as shown in FIG. 8. Further, the control unit 5 may be connected to the grid-tied power supply 1 or the power grid 2, such that the grid-tied power supply 1 or the power grid 2 supplies power to the control unit 5.

Further, the grid-tied power supply 1 includes one or more of a PV power supply, a wind energy power supply, a nuclear power supply, or an energy storage power supply. This is not specifically limited.

### Embodiment 9

Referring to FIG. 8, this embodiment provides an off-grid/grid-connected circuit, and a difference between the off-grid/grid-connected circuit in this embodiment and that in Embodiment 1 is as follows:
In this embodiment, a current turn-off module includes a rapid current turn-off unit, and the rapid current turn-off unit is connected to coil 4 of a first contactor. After grid-tied power supply 1 is connected to power grid 2, the rapid current turn-off unit is in an on state. Control unit 5 is configured to turn off the rapid current turn-off unit when sampling calculation unit 9 detects that a voltage of the power grid is less than a voltage threshold. Response time of the rapid current turn-off unit is less than 0.1 ms.

In this embodiment, the rapid current turn-off unit includes first IGBT 6 and first IGBT 7, and an emitter of the first IGBT 6 is connected to an emitter of the first IGBT 7. This ensures that a branch in which the first IGBT 6 and the first IGBT 7 are located can turn on or off in two directions, which is applicable to an AC power supply scenario. In another embodiment, a collector of the first IGBT 6 and a collector of the first IGBT 7 are connected. It can be understood as follows: Based on FIG. 8, the first IGBT 6 is translated to the right and the first IGBT 7 is translated to the left in FIG. 8. In this way, a connection mode in which the emitter of the first IGBT 6 is connected to the emitter of the first IGBT 7 (two diodes are connected back to back) is converted into a connection mode in which the collector of the first IGBT 6 is connected to the collector of the first IGBT 7 (the two diodes are connected face to face).

Response time of an IGBT is typically at a level of µs. Compared with contact separation and arc extinction time of the coil relay 5 in Embodiment 1, turn-off time of the IGBT is negligible. Therefore, the contact separation and arc extinction time of the coil relay 5 is saved in essence during grid-connected to off-grid switching.

Further, when the voltage that is of the power grid and sampled by the sampling calculation unit 9 is less than the voltage threshold, the control unit controls the first IGBT and the second IGBT to turn off simultaneously. This reduces overall turn-off time of the rapid current turn-off unit and further shortens time of the grid-connected to off-grid switching.

### Embodiment 10

Referring to FIG. 9, this embodiment provides an off-grid/grid-connected circuit, and a difference between the off-grid/grid-connected circuit in this embodiment and that in Embodiment 1 is as follows:
In this embodiment, a current turn-off module includes coil relay 5 and a rapid current turn-off unit. The rapid current turn-off unit is connected in parallel across two ends of the coil relay 5. Control unit 5 is configured to control the coil relay 5 to be in an off state and the rapid current turn-off unit to be in an on state after grid-tied power supply 1 is connected to power grid 2. When a voltage of the power grid is detected to be less than a voltage threshold, the control unit 5 controls the rapid current turn-off unit to turn off.

Further, the rapid current turn-off unit includes first IGBT 6 and first IGBT 7, an emitter of the first IGBT 6 is connected to an emitter of the first IGBT 7, and a collector of the first IGBT 6 and a collector of the first IGBT 7 are respectively connected to the two ends of the coil relay 5; or the rapid current turn-off unit includes first IGBT 6 and first IGBT 7, a collector of the first IGBT 6 is connected to a collector of the first IGBT 7, and an emitter of the first IGBT 6 and an emitter of the first IGBT 7 are respectively connected to the two ends of the coil relay 5.

After the grid-tied power supply 1 is connected to the power grid 2, the control unit 5 controls first IGBT 6 and the first IGBT 7 to simultaneously turn on, and controls the coil relay 5 to turn off. The coil relay 5 is in a normally closed state, and contact 3 of a first contactor is in a normally open state. That is, before the grid-tied power supply 1 is connected to the power grid 2, the coil relay 5 is in the on state, and the contact 3 of the first contactor is in the off state. After the coil relay 5 is powered on, coil 4 of the first contactor is powered on and controls the contact 3 of the first contactor to turn on, such that the grid-tied power supply 1 is connected to the power grid 2. Subsequently, the control unit 5 controls the first IGBT 6 and the first IGBT 7 to simultaneously turn on, and controls the coil relay 5 to turn off.

### Embodiment 11

This embodiment provides a grid-connection/disconnection control method, which is applied to the off-grid/grid-connected circuit described in Embodiment 1. The grid-connection/disconnection control method includes the following steps:
Step S1: Before grid-tied power supply 1 is connected to power grid 2, sampling calculation unit 9 samples a voltage and a current of the power grid in real time, and control unit 5 controls a current turn-off module to turn on when the voltage of the power grid is greater than a voltage threshold and the current of the power grid is less than a current threshold.
Step S2: After the grid-tied power supply 1 is connected to the power grid 2, the sampling calculation unit 9 samples the voltage of the power grid in real time, and the control unit 5 controls the current turn-off module to turn off when the sampling calculation unit 9 detects that the voltage of the power grid is less than the voltage threshold.

### Embodiment 12

This embodiment provides a grid-connection/disconnection control method, which is applied to the off-grid/grid-connected circuit described in Embodiment 1. A current turn-off module includes coil relay 5, and the grid-connection/disconnection control method includes the following steps:
Step S1: Before grid-tied power supply 1 is connected to power grid 2, sampling calculation unit 9 samples a voltage and a current of the power grid in real time, and control unit 5 controls the coil relay 5 to turn on when the voltage of the power grid is greater than a voltage threshold and the current of the power grid is less than a current threshold.
Step S2: After the grid-tied power supply 1 is connected to the power grid 2, the sampling calculation unit 9 samples the voltage of the power grid in real time, and the control unit 5 controls the coil relay 5 to turn off when the sampling calculation unit 9 detects that the voltage of the power grid is less than the voltage threshold.

### Embodiment 13

This embodiment provides a grid-connection/disconnection control method, which is applied to the off-grid/grid-connected circuit described in Embodiment 2. A current turn-off module includes a rapid current turn-off unit, and the grid-connection/disconnection control method includes the following steps:
Step S1: Before grid-tied power supply 1 is connected to power grid 2, sampling calculation unit 9 samples a voltage and a current of the power grid in real time, and control unit 5 controls the rapid current turn-off unit to turn on when the voltage of the power grid is greater than a voltage threshold and the current of the power grid is less than a current threshold.
Step S2: After the grid-tied power supply 1 is connected to the power grid 2, the sampling calculation unit 9 samples the voltage of the power grid in real time, and the control unit 5 controls the rapid current turn-off unit to turn off when the sampling calculation unit 9 detects that the voltage of the power grid is less than the voltage threshold.

### Embodiment 14

This embodiment provides a grid-connection/disconnection control method, which is applied to the off-grid/grid-connected circuit described in Embodiment 3. A current turn-off module includes coil relay 5 and a rapid current turn-off unit, and the grid-connection/disconnection control method includes the following steps:
Step S1: Before grid-tied power supply 1 is connected to power grid 2, sampling calculation unit 9 samples a voltage and a current of the power grid in real time, and control unit 5 controls the coil relay to turn on when the voltage of the power grid is greater than a voltage threshold and the current of the power grid is less than a current threshold.
Step S2: After the grid-tied power supply 1 is connected to the power grid 2, the control unit 5 controls the coil relay 5 to turn off after controlling the rapid current turn-off unit to turn on, the sampling calculation unit 9 samples the voltage of the power grid in real time, and the control unit 5 controls the rapid current turn-off unit to turn off when the sampling calculation unit 9 detects that the voltage of the power grid is less than the voltage threshold.

The above embodiments are intended to illustrate only the technical conception and characteristics of the present disclosure, and are intended to enable a person familiar with the technology to understand content of the present disclosure and apply the content accordingly, and shall not limit the scope of protection of the present disclosure thereby. Any equivalent change or modification in accordance with the spiritual essence of the present disclosure shall fall within the scope of protection of the present disclosure.

## Claims

1. A switching circuit, comprising a first power supply terminal, a second power supply terminal, a first contactor, a first relay, and a control unit, wherein the first power supply terminal is connected to a power grid, the second power supply terminal is connected to a grid-tied power supply, the first contactor is configured to control turn-on and turn-off of a circuit, and the first relay is configured to control signal conversion and isolation;
the first contactor comprises a contact of the first contactor and a coil of the first contactor;
the first power supply terminal is connected to the second power supply terminal through the contact of the first contactor, and the first power supply terminal is also connected to the coil of the first contactor through the first relay; and
the control unit controls turn-on and turn-off of the first relay.

2. The switching circuit according to claim 1, further comprising an auxiliary power supply, wherein the first power supply terminal is separately connected to the second power supply terminal and the auxiliary power supply through the contact of the first contactor, the auxiliary power supply is connected to the control unit to provide a working power supply for the control unit, and a contact of the first relay is a normally closed contact.

3. The switching circuit according to claim 1 or 2, wherein the first power supply terminal is also connected to a user load through the contact of the first contactor.

4. The switching circuit according to claim 1, further comprising a first circuit breaker, wherein the first power supply terminal is connected to the power grid through the first circuit breaker, the first circuit breaker is configured to interrupt a current path in the circuit, a contact of the first relay is a normally closed contact, and the contact of the first contactor is a normally open contact.

5. The switching circuit according to claim 1, further comprising a third power supply terminal, a second contactor, and a second relay, wherein the second contactor is configured to control the turn-on and the turn-off of the circuit, and the second relay is configured to control the signal conversion and isolation;
the second contactor comprises a contact of the second contactor and a coil of the second contactor;
the third power supply terminal is connected to the second power supply terminal through the contact of the second contactor, and the third power supply terminal is also connected to the coil of the second contactor through the second relay; and
the control unit is further configured to control turn-on and turn-off of the second relay.

6. The switching circuit according to claim 5, further comprising an auxiliary power supply and an electricity load, wherein the third power supply terminal is separately connected to the second power supply terminal, the auxiliary power supply, and the user load through the contact of the second contactor, and the auxiliary power supply is connected to the control unit to provide a working power supply for the control unit.

7. The switching circuit according to claim 5 or 6, further comprising a third relay, wherein the coil of the second contactor is connected to the second power supply terminal through the third relay, and the control unit is further configured to control turn-on and turn-off of a contact of the third relay.

8. The switching circuit according to claim 5 or 6, further comprising a second circuit breaker, wherein the third power supply terminal is connected to a fuel generator or an intelligent load through the second circuit breaker, the second circuit breaker is configured to interrupt a current path in the circuit, a contact of the second relay is a normally closed contact, and the contact of the second contactor is a normally open contact.

9. The switching circuit according to claim 2, further comprising a semiconductor switching transistor, wherein the semiconductor switching transistor is connected in parallel to the contact of the first relay; and
the control unit is configured to control the semiconductor switching transistor to turn on and control the contact of the first relay to turn off when the auxiliary power supply is energized.

10. The switching circuit according to claim 9, wherein the semiconductor switching transistor adopts any one of a power diode, a field effect transistor (FET), a bipolar junction transistor (BJT), an insulated gate bipolar transistor (IGBT), and a thyristor.

11. The switching circuit according to claim 1, wherein the grid-tied power supply comprises one or more of a photovoltaic (PV) power supply, a wind power supply, a nuclear power supply, and an energy storage power supply, and the second power supply terminal is connected to the grid-tied power supply through an inverter.

12. The switching circuit according to claim 1, further comprising a rapid current turn-off unit, wherein the rapid current turn-off unit is connected in parallel across two ends of the first relay, and the control unit controls turn-on and turn-off of the rapid current turn-off unit.

13. The switching circuit according to claim 12, wherein the rapid current turn-off unit comprises a first IGBT and a second IGBT, an emitter of the first IGBT is connected to an emitter of the second IGBT, and a collector of the first IGBT and a collector of the second IGBT are respectively connected to the two ends of the first relay; or the rapid current turn-off unit comprises a first IGBT and a second IGBT, a collector of the first IGBT is connected to a collector of the second IGBT, and an emitter of the first IGBT and an emitter of the second IGBT are respectively connected to the two ends of the first relay.

14. The switching circuit according to claim 13, wherein the control unit controls the first IGBT and the second IGBT to turn on or off simultaneously, so as to bidirectionally turn on or off a branch in which the first IGBT and the second IGBT are located.

15. The switching circuit according to claim 1, wherein response time of the rapid current turn-off unit is less than 0.1 ms.

16. An off-grid/grid-connected circuit, comprising a grid-tied power supply, a power grid, and the switching circuit according to any one of claims 12 to 15, wherein the contact of the first contactor is connected between the grid-tied power supply and the power grid.

17. The off-grid/grid-connected circuit according to claim 16, wherein after the first relay is energized, the coil of the first contactor is energized and controls the contact of the first contactor to turn on, such that the grid-tied power supply is connected to the power grid; and after the grid-tied power supply is connected to the power grid, the control unit controls the first IGBT and the second IGBT to turn on synchronously and controls the first relay to turn off.

18. The off-grid/grid-connected circuit according to claim 17, wherein when a short circuit occurs on a power grid side, the control unit controls the first IGBT and the second IGBT to turn off synchronously.

19. The off-grid/grid-connected circuit according to claim 16, further comprising a detection unit, wherein the detection unit is connected to the control unit, the detection unit detects in real time whether a short circuit occurs on a power grid side, and the control unit controls, based on a detection result of the detection unit, the first IGBT and the second IGBT to turn on or off synchronously.

20. The off-grid/grid-connected circuit according to claim 19, wherein the detection unit determines, by detecting a voltage and/or an instantaneous active power of the power grid in real time, whether the short circuit occurs on the power grid side.

21. An off-grid/grid-connected circuit, comprising a grid-tied power supply, a power grid, and the switching circuit according to any one of claims 1 to 11, wherein the off-grid/grid-connected circuit further comprises a sampling calculation unit; the sampling calculation unit samples a voltage of the power grid in real time and compares the sampled voltage of the power grid with a voltage threshold; and when the voltage that is of the power grid and sampled by the sampling calculation unit is less than the voltage threshold, the control unit turns off the first relay.

22. The off-grid/grid-connected circuit according to claim 21, wherein the switching circuit further comprises a rapid current turn-off unit, and the rapid current turn-off unit is connected in parallel across two ends of the first relay; the control unit controls turn-on and turn-off of the rapid current turn-off unit; and when the voltage that is of the power grid and sampled by the sampling calculation unit is less than the voltage threshold, the control unit turns off the first relay or the rapid current turn-off unit.

23. The switching circuit according to claim 22, wherein the rapid current turn-off unit comprises a first IGBT and a second IGBT, an emitter of the first IGBT is connected to an emitter of the second IGBT, and a collector of the first IGBT and a collector of the second IGBT are respectively connected to the two ends of the first relay; or the rapid current turn-off unit comprises a first IGBT and a second IGBT, a collector of the first IGBT is connected to a collector of the second IGBT, and an emitter of the first IGBT and an emitter of the second IGBT are respectively connected to the two ends of the first relay.

24. The switching circuit according to claim 23, wherein the control unit controls the first IGBT and the second IGBT to turn on or off simultaneously, so as to bidirectionally turn on or off a branch in which the first IGBT and the second IGBT are located.

25. The switching circuit according to claim 22, wherein response time of the rapid current turn-off unit is less than 0.1 ms.

26. The off-grid/grid-connected circuit according to claim 22, wherein the sampling calculation unit is further configured to sample the voltage and a current of the power grid in real time before the grid-tied power supply is connected to the power grid, and the control unit is further configured to turn on the rapid current turn-off unit when the voltage of the power grid is greater than the voltage threshold and the current of the power grid is less than a current threshold.

27. The off-grid/grid-connected circuit according to claim 22, wherein the voltage threshold is any value within a range of 50% to 95% of a reference voltage of the power grid.

28. The off-grid/grid-connected circuit according to claim 22, wherein the voltage threshold is any value within a range of 5% to 50% of a reference voltage of the power grid.

29. A grid-connection/disconnection control method, applied to the off-grid/grid-connected circuit according to claim 16, and comprising following steps:
S1, turning on the first relay after powering on the power grid, and turning on the contact of the first contactor after energizing the coil of the first contactor, such that the grid-tied power supply is connected to the power grid; and
S2, after the grid-tied power supply is connected to the power grid, controlling the rapid current turn-off unit to turn on and controlling the first relay to turn off.

30. The grid-connection/disconnection control method according to claim 29, further comprising a following step:
S3, when a short circuit occurs on a power grid side, controlling, by using the control unit, the first IGBT and the second IGBT to turn off synchronously, so as to bidirectionally turn off a branch in which the first IGBT and the second IGBT are located.

31. The grid-connection/disconnection control method according to claim 29, wherein in the step S3, whether the short circuit occurs on the power grid side is detected in real time by using a detection unit.

32. A grid-connection/disconnection control method, applied to the off-grid/grid-connected circuit according to claim 21, and comprising following steps:
L1, before the grid-tied power supply is connected to the power grid, sampling, by the sampling calculation unit, a voltage and a current of the power grid in real time, and controlling, by the control unit, the first relay or a rapid current turn-off unit to turn on when the voltage of the power grid is greater than the voltage threshold and the current of the power grid is less than a current threshold; and
L2, after the grid-tied power supply is connected to the power grid, sampling, by the sampling calculation unit, the voltage of the power grid in real time, and controlling, by the control unit, the first relay or the rapid current turn-off unit to turn off when the sampling calculation unit detects that the voltage of the power grid is less than the voltage threshold.

33. A grid-connection/disconnection control method, applied to the off-grid/grid-connected circuit according to claim 21, and comprising following steps:
L1, before the grid-tied power supply is connected to the power grid, sampling, by the sampling calculation unit, a voltage and a current of the power grid in real time, and controlling, by the control unit, the first relay to turn on when the voltage of the power grid is greater than the voltage threshold and the current of the power grid is less than a current threshold; and
L2, after the grid-tied power supply is connected to the power grid, controlling, by the control unit, the first relay to turn off after controlling a rapid current turn-off unit to turn on, sampling, by the sampling calculation unit, the voltage of the power grid in real time, and controlling, by the control unit, the rapid current turn-off unit to turn off when the sampling calculation unit detects that the voltage of the power grid is less than the voltage threshold.
